# EUROPEAN PATENT APPLICATION

(11) **EP 2 234 063 A1**
(43) Date of publication of application: **29.09.2010**
(21) Application number: 09702552.2
(22) Date of filing: 14.01.2009
(51) Int. Cl.: G06T 7/00, G06T 1/00

(54) **SKIN COLOR EVALUATION METHOD, SKIN COLOR EVALUATION APPARATUS, SKIN COLOR EVALUATION PROGRAM, AND RECORDING MEDIUM WITH THE PROGRAM RECORDED THEREON**

(30) Priority: 17.01.2008 JP 2008008370
(71) Applicant: Shiseido Company, Ltd., Chuo-ku Tokyo 104-8010 (JP)
(72) Inventor: YOSHIKAWA, Hironobu, Tokyo 104-8010 (JP)
(74) Representative: Vinsome, Rex Martin
(86) International application number: PCT/JP2009/050347
(87) International publication number: WO 2009/090948

(57) **Abstract**

In a skin color evaluation method for evaluating skin color from an input image including a face region, there are included a division step for dividing an entire face region of the image into predetermined regions according to first feature points formed of at least 25 areas that are set beforehand and second feature points that are set by using the first feature points, a skin color distribution evaluation step for performing evaluation by generating a skin color distribution based on average values using at least one of L^{*}, a^{*}, b^{*}, C_{ab}^{*}, and h_{ab} of a L*a*b* color system, tri-stimulus values X, Y, Z of an XYZ color system, and the values of RGB, hue H, lightness V, chroma C, melanin amount, and hemoglobin amount and performing evaluation based on measured results with respect to the regions divided in the dividing step, and a screen generation step for displaying the measured results or evaluation results on a screen.

## Description

### TECHNICAL FIELD

The present invention relates to a skin color evaluation method, a skin color evaluation apparatus, a skin color evaluation program, and a recording medium with the program recorded thereon, and more particularly to a skin color evaluation method, a skin color evaluation apparatus, a skin color evaluation program, and a recording medium with the program recorded thereon for evaluating skin color with high accuracy.

### BACKGROUND ART

As for conventional methods of diagnosing and evaluating skin color of a face, there is, for example, a method of measuring one to several points of a face by using a colorimeter and evaluating the measurement results as skin color data (see, for example, non-patent documents 1, 2). The strong point of this method is that evaluation can be performed by obtaining a large amount of data on a certain portion, so that, for example, the distribution range and average value of that portion for Japanese women can be calculated and these indices can be compared with skin color data of an individual.

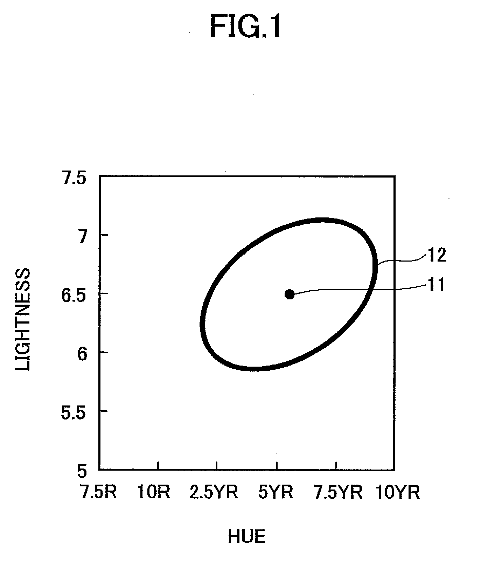

Fig. 1 illustrates an example of skin evaluation using a conventional method. It is to be noted that the vertical axis indicates lightness and the horizontal axis indicates hue. The average value 11 of the skin color of a portion below the cheek for Japanese women and a confidence oval 12 of 95% of the portion below the cheek for Japanese women are shown in the example illustrated in Fig. 1 based on a vast amount of measurement results. Skin color evaluation for an individual is performed by measuring the skin color of a portion below the cheek of a test subject and determining the position of the measured result with respect to the average value 11 and a certain region (e.g., whether the measured result is outside or inside the 95% confidence oval 12). Further, evaluation is performed by comparing skin color of the same person before and after using makeup or comparing with another person's skin color.

However, there is a problem that "data of merely several points on a face do not represent the skin color of an entire face", and there is a demand that data of various portion of a face are to be simultaneously obtained and evaluated. Thus, recently, there has been developed a method of performing skin color evaluation by using image data obtained from a digital camera (see, for example, non-patent documents 3, 4). The strong point of this method is a face can be divided into several million portions and the skin color of these portions can be obtained.
Non-patent document 1: Shibatani et al., "Research on skin color and effect of makeup (First report) - development of skin color measuring method and research on base makeup effect", Journal of Society of Cosmetic Chemists of Japan, Vol. 17, No. 2, 1983.
Non-patent document 2: Shibatani et al., "Measurements of Aging Effect of Facial Color Distribution and Applications", Journal of Society of Cosmetic Chemists of Japan, Vol. 19, No. 1, 1985.
Non-patent document 3: Shibue et al., "New experiment for evaluating skin color and color unevenness of a women's face- development of polarization image analyzing system and application to evaluation of color unevenness", Journal of Society of Cosmetic Chemists of Japan, Vol. 26, No. 2, 1992.
Non-patent document 4: L. Caisey et al., "Skin color and makeup strategy for women of different races", Fragrance Journal 2007-4.

### DISCLOSURE OF THE INTENTION

### PROBLEM TO BE SOLVED BY THE INVENTION

However, in a case of a conventional method using images of a digital camera, the relative position within a face is different among people even if the (x, y) coordinates are the same. Further, even if the person is the same, the relative position within a face may be different depending on the day of taking a picture. Therefore, high accuracy evaluation cannot be performed merely by comparing data or differences among coordinate points.

Since it is impossible to calculate valuable indices such as skin color distribution and average value, obtaining an average value of an entire face or using data of only a portion of a face are performed. Further, since it is difficult to obtain the difference of skin color, error may occur when comparing the skin color of a same person before and after using makeup, comparing the skin color of a portion the same as that in the past, and comparing the skin color between two people. Thus, high accuracy evaluation cannot be performed.

In light of the above-described problems, it is an object of the present invention to provide a skin color evaluation method, a skin color evaluation apparatus, a skin color evaluation program, and a recording medium with the program recorded thereon for evaluating skin color with high accuracy.

### MEANS OF SOLVING THE PROBLEMS

In order to solve the foregoing problems, the present invention provides the following means for solving the problems.

The present invention provides a skin color evaluation method for evaluating skin color from an input image including a face region, the skin color evaluation method characterized by including: a division step for dividing an entire face region of the image into predetermined regions according to first feature points formed of at least 25 areas that are set beforehand and second feature points that are set by using the first feature points; a skin color distribution evaluation step for performing evaluation by generating a skin color distribution based on average values using at least one of L^{*}, a^{*}, b^{*}, C_{ab}^{*}, and h_{ab} of a L*a*b* color system, tri-stimulus values X, Y, Z of an XYZ color system, and the values of RGB, hue H, lightness V, chroma C, melanin amount, and hemoglobin amount and performing evaluation based on measured results with respect to the regions divided in the dividing step; and a screen generation step for displaying the measured results or evaluation results on a screen.

Accordingly, because skin color evaluation is performed by using evaluation of skin color can be performed by using average values using at least one of L^{*}, a^{*}, b^{*}, C_{ab}^{*}, and h_{ab} of a L*a*b* color system, tri-stimulus values X, Y, Z of an XYZ color system, and the values of RGB, hue H, lightness V, chroma C, melanin amount, and hemoglobin amount with respect to regions divided by a predetermined dividing method, skin color can be evaluate with high accuracy.

Further, the division step sets a plurality of the at least 25 areas for a forehead, a vicinity of left and right eyes, a nose, a mouth, and a face line below a face line of an entire face image.

Accordingly, because feature points are set with consideration that skin color is different depending on the portion of the face, regions of different skin color can be evaluated with high accuracy.

Further, the division step divides into 93 regions surrounded by no less than 3 areas selected from the first feature points and the second feature points.

Accordingly, by selecting feature points and setting optimum regions, skin color distribution can be accurately evaluated.

Further, the skin color distribution evaluation step performs evaluation by associating a skin color distribution generated according to average values of each divided region using at least one of L^{*}, a^{*}, b^{*}, C_{ab}^{*}, h_{ab} of a L*a*b* color system, tristimulus values X, Y, Z of an XYZ color system, and the values of RGB, hue H, lightness V, chroma C, melanin amount, and hemoglobin amount with respect to a skin color distribution of each divided region of an average face by compositing a plurality of facial images prepared beforehand with a morphing process and averaging facial shapes.

Accordingly, evaluation can be performed with high accuracy based on an average face by compositing plural facial shapes with a morphing process and averaging the facial shapes.

Further, the skin color distribution evaluation step obtains average values from at least one of L^{*}, a^{*}, b^{*}, C_{ab}^{*}, and h_{ab} of a L*a*b* color system, tri-stimulus values X, Y, Z of an XYZ color system, and the values of RGB, hue H, lightness V, chroma C, melanin amount, and hemoglobin amount, aggregates the obtained average values into similar regions, and performs evaluation based on skin color distribution of the aggregated regions.

Accordingly, evaluation of skin color distribution can be easily performed by aggregating similar regions based on features set beforehand.

Further, the skin color distribution evaluation step performs evaluation of the skin color distribution by generating at least one of an ideal skin color distribution set beforehand, a past skin color distribution, another person's skin color distribution, an average value of plural skin color distributions, and the skin color distribution of the aggregated regions as a comparative skin color distribution and comparing the comparative skin color distribution with a target individual data.

Accordingly, because average value data of people belonging to a certain category (age-group, occupation-group, gender-group), data of an ideal person such as a celebrity, past data of an individual, and difference values between two persons (data of another person) can be obtained, it can be utilized for, for example, counseling when selling cosmetics.

The present invention also provides a skin color evaluation apparatus for evaluating skin color from an input image including a face region, the skin color evaluation apparatus characterized by comprising: a division part for dividing an entire face region of the image into predetermined regions according to first feature points formed of at least 25 areas that are set beforehand and second feature points that are set by using the first feature points; a skin color distribution evaluation part for performing evaluation by generating a skin color distribution based on average values using at least one of L^{*}, a^{*}, b^{*}, C_{ab}^{*}, and h_{ab} of a L*a*b* color system, tri-stimulus values X, Y, Z of an XYZ color system, and the values of RGB, hue H, lightness V, chroma C, melanin amount, and hemoglobin amount and performing evaluation based on measured results with respect to the regions divided by the dividing part; and a screen generation part for displaying the measured results or evaluation results on a screen.

Accordingly, because skin color evaluation is performed by using evaluation of skin color can be performed by using average values using at least one of L^{*}, a^{*}, b^{*}, C_{ab}^{*}, and h_{ab} of a L*a*b* color system, tri-stimulus values X, Y, Z of an XYZ color system, and the values of RGB, hue H, lightness V, chroma C, melanin amount, and hemoglobin amount with respect to regions divided by a predetermined dividing method, skin color can be evaluate with high accuracy.

Further, the division part sets a plurality of the at least 25 areas for a forehead, a vicinity of left and right eyes, a nose, a mouth, and a face line below a face line of an entire face image.

Accordingly, because feature points are set with consideration that skin color is different depending on the portion of the face, regions of different skin color can be evaluated with high accuracy.

Further, the division part divides into 93 regions surrounded by no less than 3 areas selected from the first feature points and the second feature points.

Accordingly, by selecting feature points and setting optimum regions, skin color distribution can be accurately evaluated.

Further, the skin color distribution evaluation part performs evaluation by associating a skin color distribution generated according to average values of each divided region using at least one of L^{*}, a^{*}, b^{*}, C_{ab}^{*}, h_{ab} of a L*a*b* color system, tri-stimulus values X, Y, Z of an XYZ color system, and the values of RGB, hue H, lightness V, chroma C, melanin amount, and hemoglobin amount with respect to a skin color distribution of each divided region of an average face by compositing a plurality of facial images prepared beforehand with a morphing process and averaging facial shapes.

Accordingly, evaluation can be performed with high accuracy based on an average face by compositing plural facial shapes with a morphing process and averaging the facial shapes.

Further, the skin color distribution evaluation part obtains average values from at least one of L^{*}, a^{*}, b^{*}, C_{ab}^{*}, and h_{ab} of a L*a*b* color system, tri-stimulus values X, Y, Z of an XYZ color system, and the values of RGB, hue H, lightness V, chroma C, melanin amount, and hemoglobin amount, aggregates the obtained average values into similar regions, and performs evaluation based on skin color distribution of the aggregated regions.

Accordingly, evaluation of skin color distribution can be easily performed by aggregating similar regions based on features set beforehand.

Further, the skin color distribution evaluation part performs evaluation of the skin color distribution by generating at least one of an ideal skin color distribution set beforehand, a past skin color distribution, another person's skin color distribution, an average value of plural skin color distributions, and the skin color distribution of the aggregated regions as a comparative skin color distribution and comparing the comparative skin color distribution with a target individual data.

Accordingly, because average value data of people belonging to a certain category (age-group, occupation-group, gender-group), data of an ideal person such as a celebrity, past data of an individual, and difference values between two persons (data of another person) can be obtained, it can be utilized for, for example, counseling when selling cosmetics.

Further, the present invention also provides a skin color evaluation program for evaluating skin color from an input image including a face region, the skin color evaluation program causing a computer to execute: a division step for dividing an entire face region of the image into predetermined regions according to first feature points formed of at least 25 areas that are set beforehand and second feature points that are set by using the first feature points; a skin color distribution evaluation step for performing evaluation by generating a skin color distribution based on average values using at least one of L^{*}, a^{*}, b^{*}, C_{ab}^{*}, and h_{ab} of a L*a*b* color system, tri-stimulus values X, Y, Z of an XYZ color system, and the values of RGB, hue H, lightness V, chroma C, melanin amount, and hemoglobin amount and performing evaluation based on measured results with respect to the regions divided in the dividing step; and a screen generation step for displaying the measured results or evaluation results on a screen.

Accordingly, because skin color evaluation is performed by using evaluation of skin color can be performed by using average values using at least one of L^{*}, a^{*}, b^{*}, c_{ab}^{*}, and h_{ab} of a L*a*b* color system, tri-stimulus values X, Y, Z of an XYZ color system, and the values of RGB, hue H, lightness V, chroma C, melanin amount, and hemoglobin amount with respect to regions divided by a predetermined dividing method, skin color can be evaluate with high accuracy. By installing the program, the skin color distribution evaluation of the present invention can be easily performed with, for example, a general purpose computer.

The present invention also provides a computer-readable recording medium on which a skin color evaluation program is recorded for evaluating skin color from an input image including a face region, the computer-readable recording medium on which the skin color evaluation program is recorded causing a computer to execute: a division step for dividing an entire face region of the image into predetermined regions according to first feature points formed of at least 25 areas that are set beforehand and second feature points that are set by using the first feature points; a skin color distribution evaluation step for performing evaluation by generating a skin color distribution based on average values using at least one of L^{*}, a^{*}, b^{*}, C_{ab}^{*}, and h_{ab} of a L*a*b* color system, tri-stimulus values X, Y, Z of an XYZ color system, and the values of RGB, hue H, lightness V, chroma C, melanin amount, and hemoglobin amount and performing evaluation based on measured results with respect to the regions divided in the dividing step; and a screen generation step for displaying the measured results or evaluation results on a screen.

Accordingly, the skin color evaluation program can be easily installed into plural computers with the recording medium. Further, by installing the program, the skin color distribution evaluation of the present invention can be easily performed with, for example, a general purpose computer.

### EFFECTS OF THE INVENTION

According to the present invention, skin color can be evaluated with high accuracy.

### BRIEF DESCRIPTION OF DRAWINGS

Fig. 1 is diagram illustrating an example of skin color evaluation using a conventional method;
Fig. 2 is a diagram illustrating an example of a functional configuration of a skin color evaluation apparatus according to an embodiment of the present invention;
Fig. 3 is a diagram illustrating an example of a hardware configuration that can achieve a skin color evaluation process according to an embodiment of the present invention;
Fig. 4 is a flowchart illustrating an example of a skin color evaluation operation according to an embodiment of the present invention;
Fig. 5 is a diagram illustrating an example of feature points and divided regions according to an embodiment of the present invention;
Fig. 6A is a table illustrating an example of positional relationships of 109 feature points of a face corresponding to Fig. 5 (Part 1);
Fig. 6B is a table illustrating an example of positional relationships of 109 feature points of a face corresponding to Fig. 5 (Part 2);
Fig. 6C is a table illustrating an example of positional relationships of 109 feature points of a face corresponding to Fig. 5 (Part 3);
Fig. 6D is a table illustrating an example of positional relationships of 109 feature points of a face corresponding to Fig. 5 (Part 4);
Fig. 7A is a table illustrating an example of combinations of feature points of each of the regions corresponding to Fig. 5 (Part 1);
Fig. 7B is a table illustrating an example of combinations of feature points of each of the regions corresponding to Fig. 5 (Part 2);
Fig. 7C is a table illustrating an example of combinations of feature points of each of the regions corresponding to Fig. 5 (Part 3);
Fig. 8 is a diagram illustrating an example of setting other first feature points;
Fig. 9A is a diagram illustrating an example for describing the flow of face division with respect to an image obtained by photography (Part 1);
Fig. 9B is a diagram illustrating an example for describing the flow of face division with respect to an image obtained by photography (Part 2);
Fig. 9C is a diagram illustrating an example for describing the flow of face division with respect to an image obtained by photography (Part 3);
Fig. 10A is a diagram illustrating an example of skin color distribution for comparison (Part 1);
Fig. 10B is a diagram illustrating an example of skin color distribution for comparison (Part 2);
Fig. 10C is a diagram illustrating an example of skin color distribution for comparison (Part 3);
Fig. 10D is a diagram illustrating an example of skin color distribution for comparison (Part 4);
Fig. 10E is a diagram illustrating an example of skin color distribution for comparison (Part 5);
Fig. 11 is a diagram for describing a comparative example of skin color distribution by obtaining differences;
Fig. 12 is a diagram illustrating an example of regions sorted into groups;
Fig. 13 is a table illustrating an example of features of colors of each main component of each group and region numbers forming each group corresponding to Fig. 12;
Fig. 14 is a diagram illustrating an example of evaluation results of skin color distribution;
Fig. 15 is a diagram illustrating an example for describing hue H and lightness V depending on differences of groups;
Fig. 16A is a diagram illustrating an example of a histogram of hue H corresponding to Fig. 15; and
Fig. 16B is a diagram illustrating an example of a histogram of lightness V corresponding to Fig. 15.

### DESCRIPTION OF THE REFERENCE NUMERALS

- 11: average value
- 12: 95% confidence oval
- 20: skin color evaluation apparatus
- 21: input part
- 22: output part
- 23: storage part
- 24: face division part
- 25: skin color distribution evaluation part
- 26: screen generation part
- 27: control part
- 31: input apparatus
- 32: output apparatus
- 33: drive apparatus
- 34: auxiliary storage apparatus
- 35: memory apparatus
- 36: CPU
- 37: network connection apparatus
- 38: recording medium
- 41: frame
- 51, 52: line

### BEST MODE FOR CARRYING OUT THE INTENTION

### <Overview of present invention>

The present invention enables determining of skin color distribution by dividing an input face image with a predetermined method and enables only color data to be represented without shapes of a face by replacing colors of a standard face (e.g., average face). Further, average values of people belonging to a group or difference values between two people can be obtained.

Next, a skin color evaluation method, a skin color evaluation apparatus, a skin color evaluation program, and a recording medium with the program recorded thereon according to a preferred embodiment of the present invention are described with reference to the drawings.

### <Evaluation apparatus: exemplary functional configuration>

An example of a functional configuration of a skin color evaluation apparatus according to an embodiment of the present invention is described with reference to the drawings.

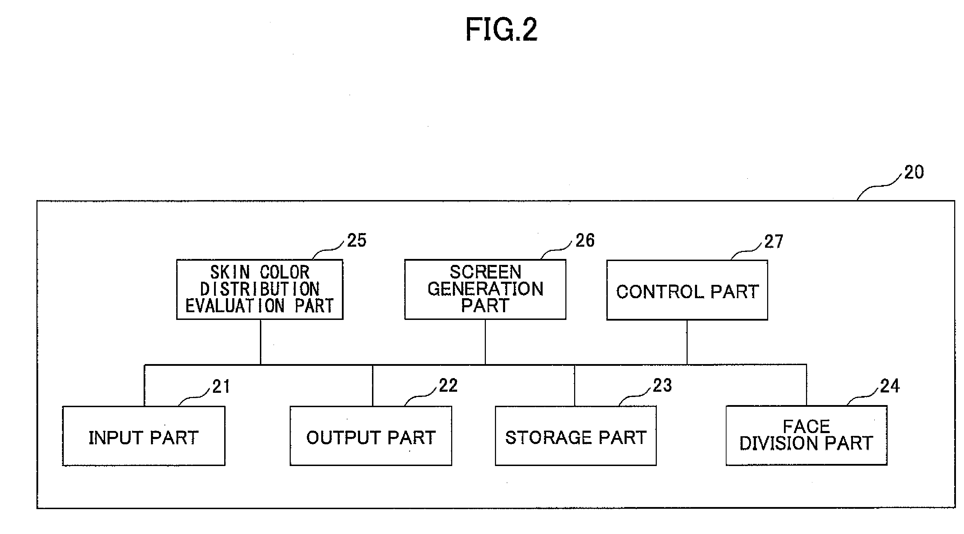

Fig. 2 is a diagram illustrating an example of a functional configuration of the skin color evaluation apparatus according to an embodiment of the present invention. The skin color evaluation apparatus 20 illustrated in Fig. 2 includes an input part 21, an output part 22, a storage part 23, a face division part 24, a skin color distribution evaluation part 25, a screen generation part 26, and a control part 27.

The input part 21 receives input from the user or the like, such as a face division command with respect to an image (or video or the like) including a face region input by the user or the like, and initiation and termination of various commands such as a skin color distribution evaluation command or a screen generation command. The input part 21 includes, for example, a keyboard or a pointing device such as a mouse. The input part 21 also has a function of inputting an image including a photograph portion of a user (e.g., a test subject) photographed with a photograph unit such as a digital camera.

Further, the output part 22 displays/outputs contents input by the input part 21 or contents processed based on the input contents. The output part 22 includes, for example, a display or a speaker. The output part 22 may also include a function of, for example, a printer.

In this case, the output part 22 can print each screen generated by the screen generation part (e.g., an input image, results of dividing a face region, skin color evaluation results) on a printing medium (e.g., paper) and provide the printing medium to a user or the like.

The storage part 23 stores various data such as face division results from the face division part 24, skin color distribution evaluation results from the skin color distribution evaluation part 25, and various screen generation results from the screen generation part 26. In a case of storing data of various images and process results, the storage part 23 may store the data together with a file name, the name/ age (generation)/ gender/ race/ of the photographed person (test subject) attached. The storage part 23 may be read to output various stored data according to necessity.

The face division part 24 performs division on a certain area of an input image by using a predetermined method. More specifically, the face division part 24 can perform division on a region suitable for evaluating skin color distribution by setting feature points beforehand with respect to, for example, an entire face, selecting at least three points from the set feature points, and performing a division method on a region surrounded by the selected feature points. Details of the division method of the face according to an embodiment of the present invention are described below.

Based on the division results obtained from the face division part 24, the skin color distribution evaluation part 25 measures skin color distribution by using average values of at least one of L*, a*, b*, C_{ab}*, and h_{ab} of the L* a* b* color system; tri-stimulus values X, Y, Z of the XYZ color system; and values of RGB, hue H, lightness V, chroma C, melanin amount, and hemoglobin amount of the divided regions. The skin color distribution evaluation part 25 performs evaluation of skin color distribution based on the measured results.

Although the melanin amount or hemoglobin amount can be obtained by using a relational expression between a preset melanin amount, hemoglobin amount and the tri-stimulus values X, Y, Z (as described in Masuda et al., "Development of new spot measuring method", Journal of Society of Cosmetic Chemists of Japan, Vol. 35, No. 4, 2001,) other methods can be used.

The skin color distribution evaluation part 25 evaluates skin color distribution based on the measured results in comparison with skin color distribution of each region of a divided average face obtained by compositing plural prepared facial images (e.g., by using a computer graphics technique referred to as a morphing process) and averaging the facial shapes.

The skin color distribution evaluation part 25 generates at least one skin color distribution for comparison (e.g. an ideal skin color distribution set beforehand, a past skin color distribution, another person's skin color distribution, an average value of plural skin color distributions, or skin color distribution of regions divided into predetermined groups) based on, for example, plural image data, skin color distribution data stored beforehand, and uses the generated skin color distribution for obtaining difference value with respect to data obtained from a target evaluation image, to thereby aggregate (group) regions having similar average values by using at least one of L*, a*, b*, C_{ab}*, and h_{ab} of the L* a* b* color system; tri-stimulus values X, Y, Z of the XYZ color system; and values of RGB, hue H, lightness V, chroma C, melanin amount, and hemoglobin amount, and perform evaluation or the like based on the skin color distribution (skin color distribution profile) of the aggregated regions.

Specifically, as examples of skin color distribution for comparison, average face skin color distributions of different age-groups and skin color distributions of different races or the like are generated by using, for example, personal identification data attached to various stored data.

Further, the skin color distribution evaluation part 25 may also perform evaluation by comparing the above-described skin color distribution profiles and comparative skin color distribution profiles prepare beforehand.

The screen generation part 26 generates a screen to be displayed to the user (test subject) based on, for example, commands input from the user or the like via the input part 21, image data obtained from the face division part 24, and evaluation results obtained from the skin color distribution evaluation part 25 and outputs the screen to the output part 22. The screen generation part 26 may, for example, color a certain region or generate a graph or a table from the obtained data of the screen and numerical values.

The control part 27 controls all components of the evaluation apparatus 20. More specifically, the control part 27 controls, for example, a face division process, a skin color distribution evaluation process, and a screen generation process based on commands input by the user or the like via the input part 21.

### <Skin color evaluation apparatus 20: hardware configuration>

A process such as the skin color evaluation process according to an embodiment of the present invention can be achieved by generating an execution program for causing a computer to execute each function of each component of the above-described skin color evaluation apparatus 20 (skin color evaluation program) and installing the execution program to a general purpose personal computer, a server or the like.

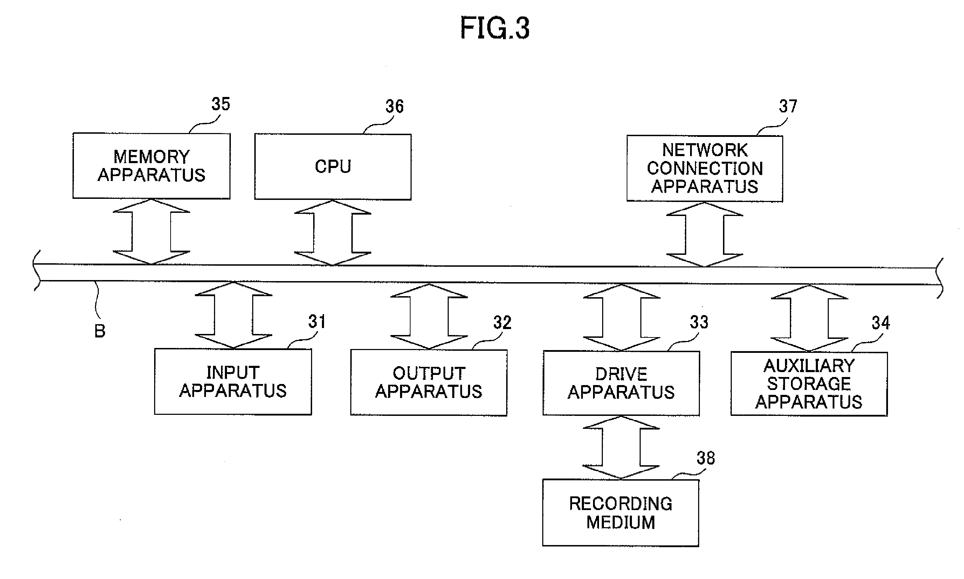

Here, an exemplary hardware configuration of a computer capable of achieving a skin color evaluation process according to an embodiment of the present invention is described with reference to the drawings. Fig. 3 is a schematic diagram illustrating an example of a hardware configuration capable of achieving the skin color evaluation process according to an embodiment of the present invention.

A computer main body of Fig. 3 includes an input apparatus 31, an output apparatus 32, a drive apparatus 33, an auxiliary storage apparatus 34, a memory apparatus 35, a CPU (Central Processing Unit) for performing various controls, and a network connection apparatus 37 that are connected to each other with a bus B.

The input apparatus 31 includes a keyboard to be operated by the user or the like and a pointing device such as a mouse. The input apparatus 31 is for inputting various control signals for executing a program from the user or the like. The input apparatus 31 also includes an input unit for inputting an image including a part of or a whole of a face of a test subject taken from a photograph unit (e.g., camera).

The output apparatus 32 includes a display for displaying, for example, various windows and data required for operating the computer main body for performing processes of the embodiment of the present invention. The output apparatus 32 can display, for example, the progressing or results of a program executed by a control program of a CPU 36.

The input apparatus 31 and the output apparatus 32 may be a united body formed of an input part and an output part such as a touch panel. In this case, input may be performed with a user's finger, a pen type input device or the like to touch a predetermined area.

The execution program to be installed in the computer main body according to an embodiment of the present invention is provided from, for example, a transportable type recording medium 38 such as a USB (Universal Serial Bus) memory or a CD-ROM. The recording medium 38 on which the program is recorded can be set in the drive apparatus 33. The execution program contained in the recording medium 38 is installed to the auxiliary storage apparatus 34 from the recording medium 38 via the drive apparatus 33.

The auxiliary storage apparatus 34 includes a storage part (e.g., hard disk). The auxiliary storage apparatus 34 can store, for example, the execution program of the present invention, control programs provided in the computer, and perform input and output according to necessity.

The memory apparatus 35 stores, for example, the execution program read out from the auxiliary storage apparatus 34 by the CPU 36. The memory apparatus 35 includes, for example, a ROM (Read Only Memory) and a RAM (Random Access Memory).

The CPU 36 can perform various processes for skin color evaluation by controlling the entire computer such as various calculations and input/output of data of hardware components based on the control program (e.g., OS (Operating System)) and the execution programs stored in the memory apparatus 35. Various data required for executing the programs can be obtained from the auxiliary storage apparatus 34. Execution results can also be stored in the auxiliary storage apparatus 34.

The network connection apparatus 37 can obtain execution programs from other terminals or the like connected to a communication network by connecting to the communication network or the like and provide execution results obtained by executing programs and other execution programs of the present invention.

With the above-described hardware configuration, the skin color evaluation process according to an embodiment of the present invention can be executed. By installing a program in a general purpose personal computer, the skin color evaluation process according to an embodiment of the present invention can be achieved.

### <Operation of a skin color evaluation process>

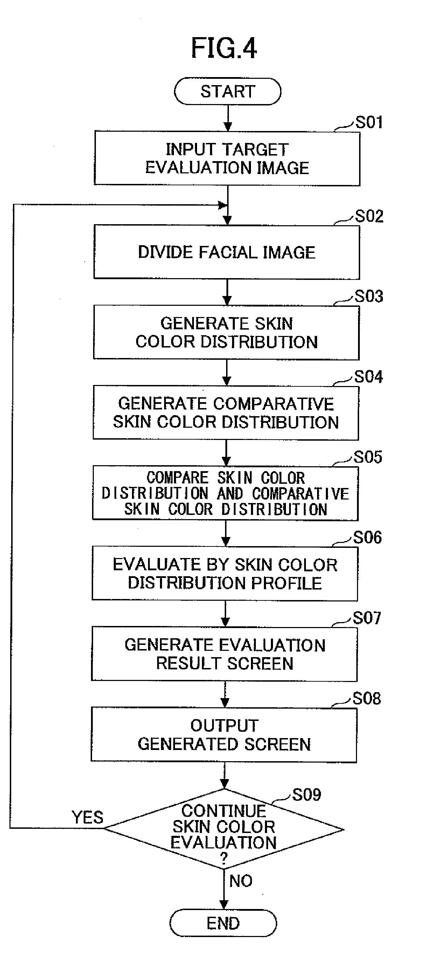

Next, processes of a skin color evaluation operation according to an embodiment of the present invention are described. Fig. 4 illustrates a flowchart of an example of a skin color evaluation process operation according to an embodiment of the present invention.

In the skin color evaluation process illustrated in Fig. 4, a target evaluation image including a face taken by a photograph unit (e.g., camera) is input (S01). Then, the input facial image is divided into a predetermined number of regions by using a predetermined dividing method (S02). The image obtained in S01 may be an image of a face entirely evenly taken by a photograph apparatus such as a digital camera. For example, an image photographed by using a photograph apparatus described in "Masuda et al., "Development of a spot/freckle quantizing system using image analysis", Journal of Society of Cosmetic Chemists of Japan, Vol. 28, No. 2, 1994)" may be used.

More specifically, a photographed facial image is obtained by using an illumination box for obtaining a facial image under the same conditions, arranging plural halogen light bulbs in front of the illumination box for evenly illuminating a face inside the illumination box, and photographing the face with a TV camera. It is to be noted that the image used for the present invention is not limited to that described in this embodiment. For example, the image may be photographed under an environment using common illumination such as a fluorescent lamp.

Next, skin color distribution is generated from an image divided into predetermined regions (S03). Further, a comparative skin color distribution, for example, is generated by using various data stored beforehand (S04). Further, skin color or the like is compared by using the skin color distribution of an individual obtained by the process of S03 and the comparative skin color distribution obtained by the process of S04 (S05), and evaluation is performed according to skin color distribution profile (S06).

Further, a screen to be displayed to the user or the like is generated according to the evaluation results obtained by the process of S06 (S07). Then, the generated screen (including, for example, content of evaluation results) is output (S08).

Then, it is determined whether to continue the skin color evaluation (S09). In a case of continuing the skin color evaluation (Yes in S09), the operation returns to the process of S02 to perform subsequent processes but performing division using a dividing method different from a previous time. In a case of not continuing the skin color evaluation in (No in S09), the operation is terminated.

Accordingly, skin color can be evaluated with high accuracy regardless of the shape of the face. More specifically, skin color distribution can be obtained by dividing an input facial image into a predetermined number of regions by using a dividing method according to an embodiment of the present invention. Further, an easily comprehensible expression formed only of color data and excluding the shape of a face can be attained in a case of generating a screen by replacing measured skin color with a standard face (e.g., average face).

Further, because average value data of people belonging to a certain category (age-group, occupation-group, gender-group), data of an ideal person such as a celebrity, past data of an individual, and difference values between two persons (data of another person) can be obtained, it can be utilized for, for example, counseling when selling cosmetics.

Next, main parts used for a skin color evaluation process according to an embodiment of the present invention are described in detail.

### <Face division part 24: S02>

A face dividing method of the above-described face division part 24 is described in detail. The face division part 24 performs a predetermined division on a digital screen including an input face.

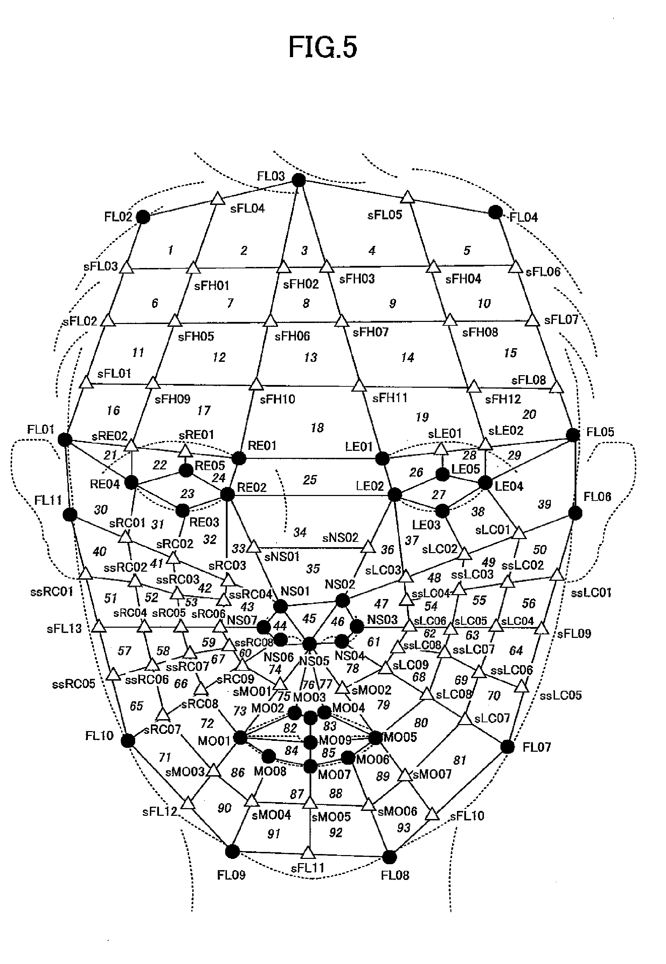

Fig. 5 is a diagram illustrating an example of feature points and divided regions according to an embodiment of the present invention. In this embodiment, as illustrated in Fig. 5, an entire face is divided into 93 regions, an average skin color is obtained from each of the divided regions, and distribution of skin color is expressed by 93 skin color data, to thereby perform skin color evaluation based on the distribution.

Accordingly, by obtaining a large amount of data with respect to a certain portion (which is a strong point of a conventional method), a distribution range or average value of that certain portion for, for example, a Japanese female (could be other races or could be male) could be calculated. As a result, skin color data of an individual can be evaluated by comparing them with these indices. In addition, for example, skin color comparison of the same person before and after the use of cosmetics or comparison with another person's skin color can be performed.

Here, the dividing method illustrated with-Fig. 5 uses, for example, 109 feature points. The divided regions illustrated in Fig. 5 are, for example, 93 regions which have triangular or quadrangular shapes including three or four feature points (in Fig. 5, the regions are indicated with numerals 1-93).

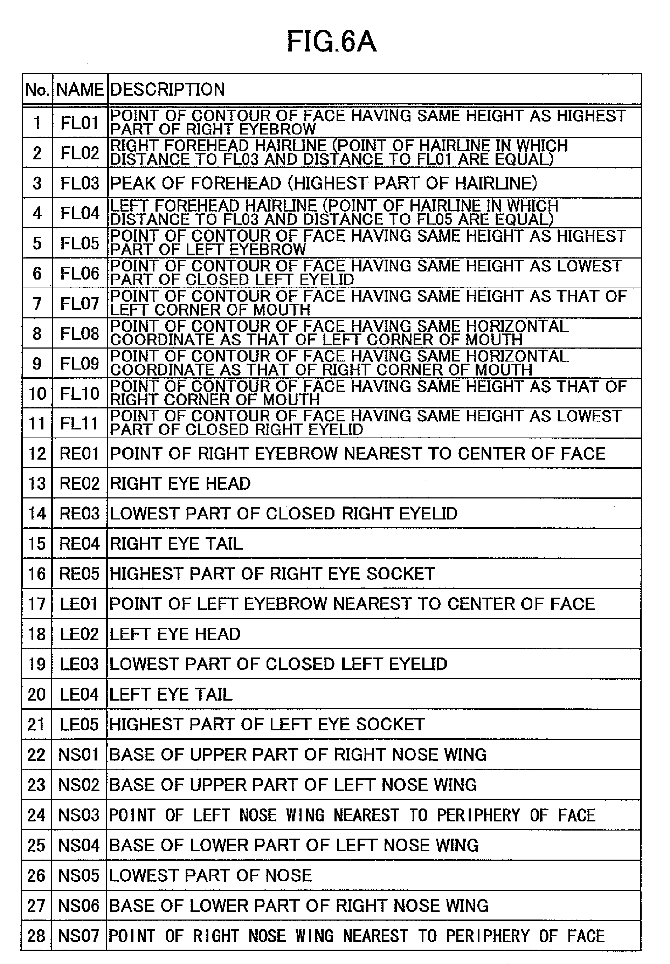

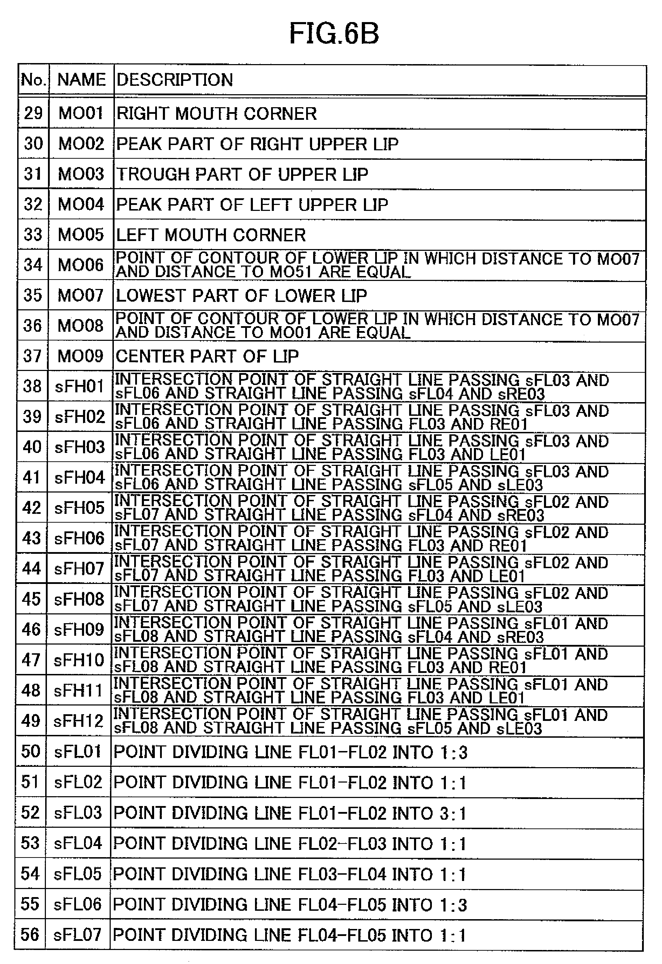

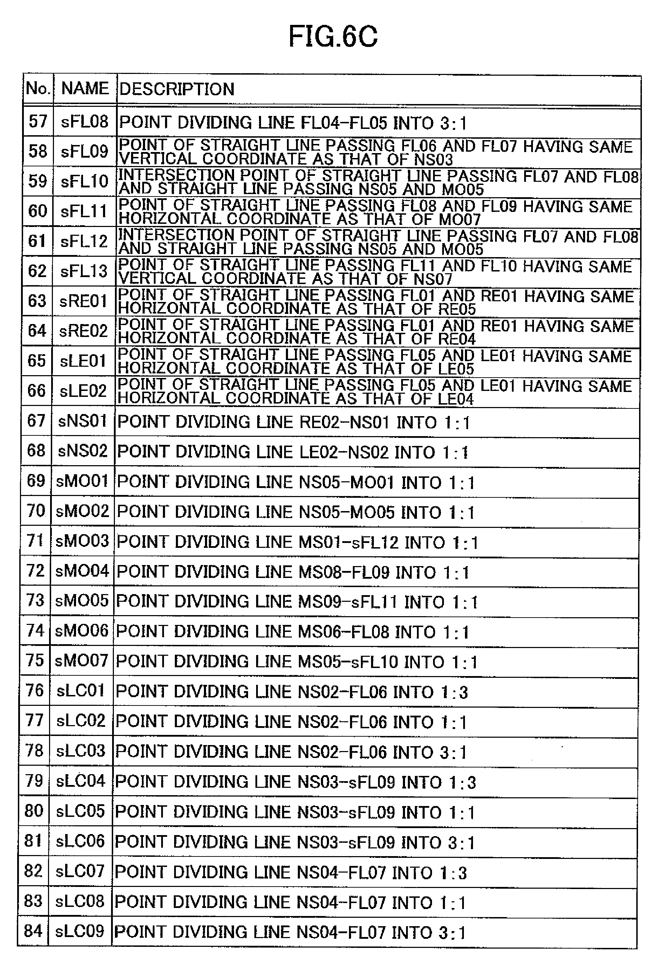

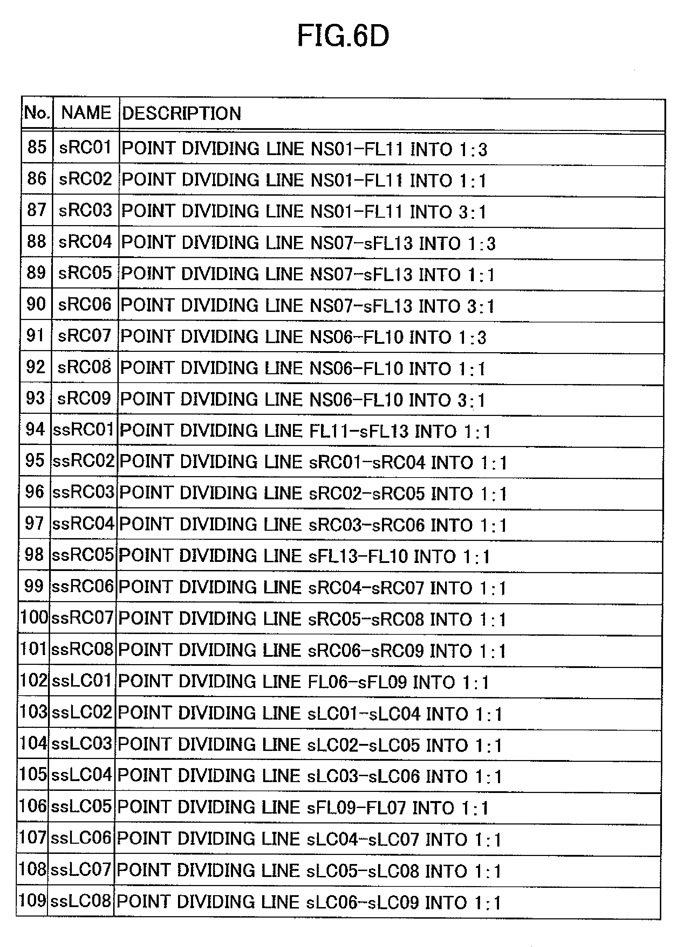

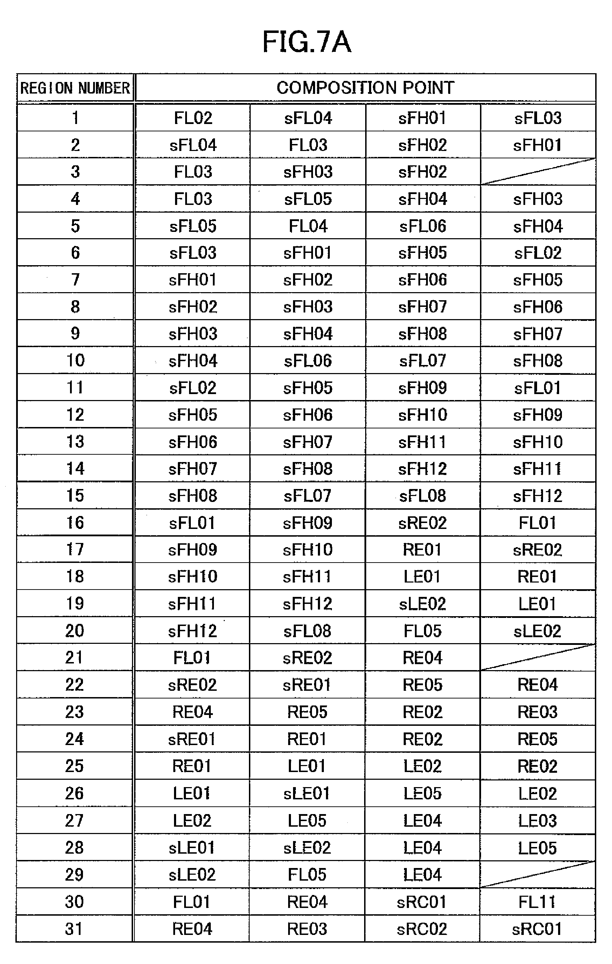

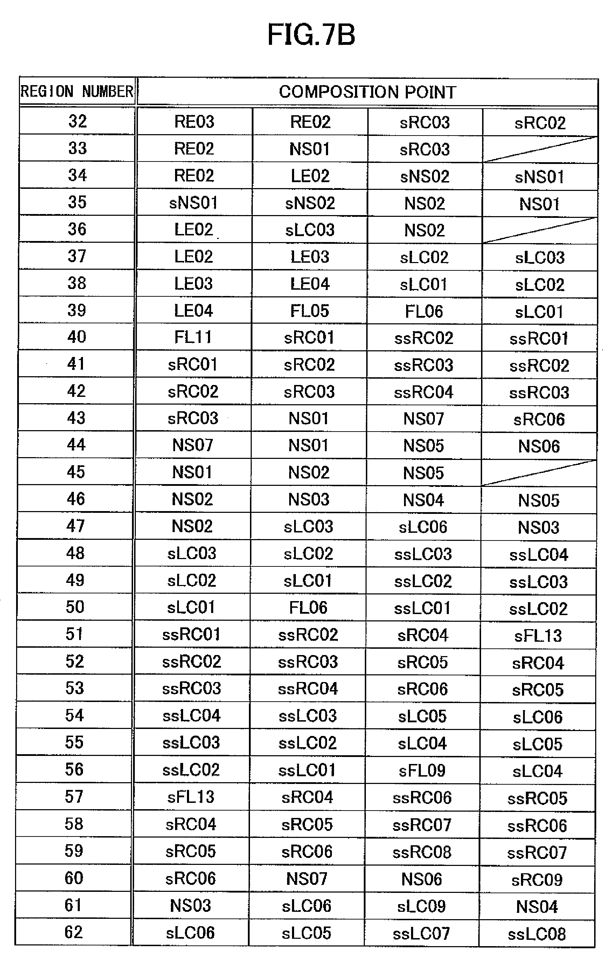

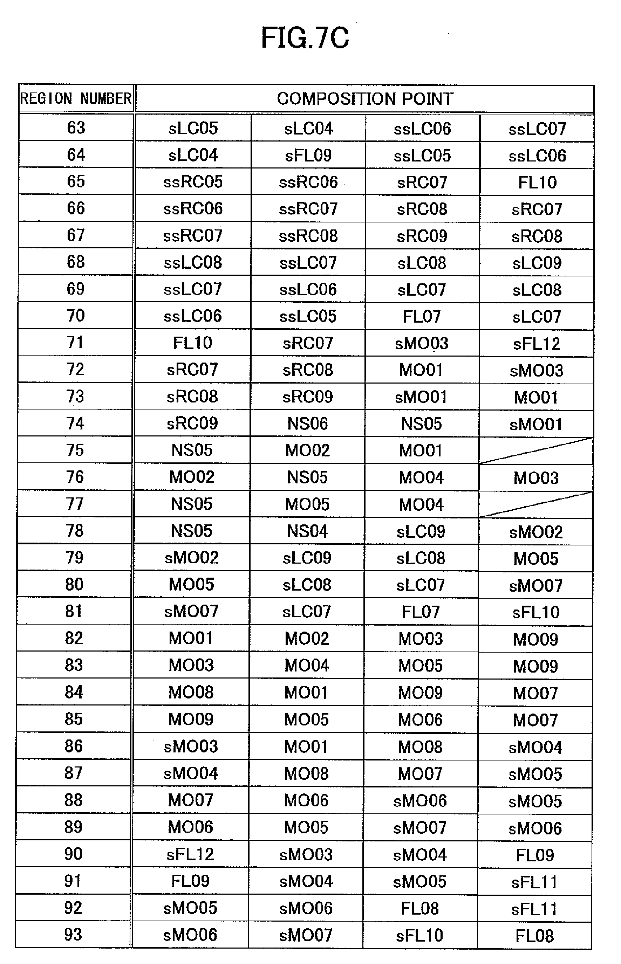

Figs. 6A-6D are tables illustrating an example of positional relationships of 109 feature points of a face corresponding to Fig. 5. Figs. 7A-7C are tables illustrating an example of combinations of feature points of each of the regions corresponding to Fig. 5. It is to be noted that the items "No." and "NAME" in Figs. 6A-6D and the items "REGION NUMBER" and "COMPOSITION POINT" in Figs. 7A-7C correspond to the contents illustrated in Fig. 5.

In setting the content of division, the face division part 24 first sets feature points Nos. 1-37 from the feature points indicated in Figs. 6A-6D (for example, the points indicated with black circles in Fig. 5) as first feature points. For example, it is preferable to provide the 37 feature points in the entire face region in a manner that 5 points are provided at a forehead portion, 10 points are provided at the vicinity of the left and right eyes, 7 points are provided at the nose, 9 points are provided at the mouth, and 6 points are provided at a face line below the eyes.

Next, a face division part 24 sets feature points Nos. 38-109 (for example, the points indicated with white triangles in Fig. 5) as second feature points by referring to the above-described 37 feature points (feature points) as a criterion.

For example, as illustrated in Figs. 6A-6B, there can be obtained a total of 109 points including the first feature points 1-37 which are defined beforehand corresponding to Nos. 1-37; points 38-49 which are that feature points obtained from intersection points of plural straight lines passing at least two feature points,; points 50-57, 67-109 which are feature points obtained from lines between two points divided into a predetermined proportion; and points 58-66 which are feature points obtained from points that are situated on a straight line passing two feature points and have same vertical or horizontal coordinates as a predetermined point.

As illustrated in Figs. 7A-7C, the face is divided into regions formed of at least 3 composition points of the first and second feature points (109 points). The points forming these regions may not only be three points or four points as illustrated in Figs. 7A-7C but could be five or more points.

Each of the regions illustrated in Fig. 5 (region nos. 1-93) are divided (set) in a manner having physiological significance based on broad experience of skin observation. That is, by setting as illustrated in Fig. 5, regions which tend to exhibit unevenness of color are divided into narrow regions and regions which do not tend to exhibit unevenness of color are divided into wide regions.

More specifically, for example, the embodiment illustrated in Figs. 5-7C, the forehead portion is set to be divided into wide regions whereas the portion around the eyes, mouth, and cheek are set to be divided into narrow regions. The portions (regions) having importance in skin color evaluation are set with narrowly divided regions, so that evaluation can be performed in greater detail.

By determining the colors that tend to appear for each of the region beforehand based on, for example, past data and referring to the degree of the colors, the divided regions can be aggregated (grouped). Accordingly, evaluation can easily be performed for each group.

Although 37 points (Nos. 1-37) are determined beforehand as feature points according to the embodiment of Figs. 5-7C, the present invention is not limited to this embodiment. For example, division can be performed by setting 25 points feature points (first feature points).

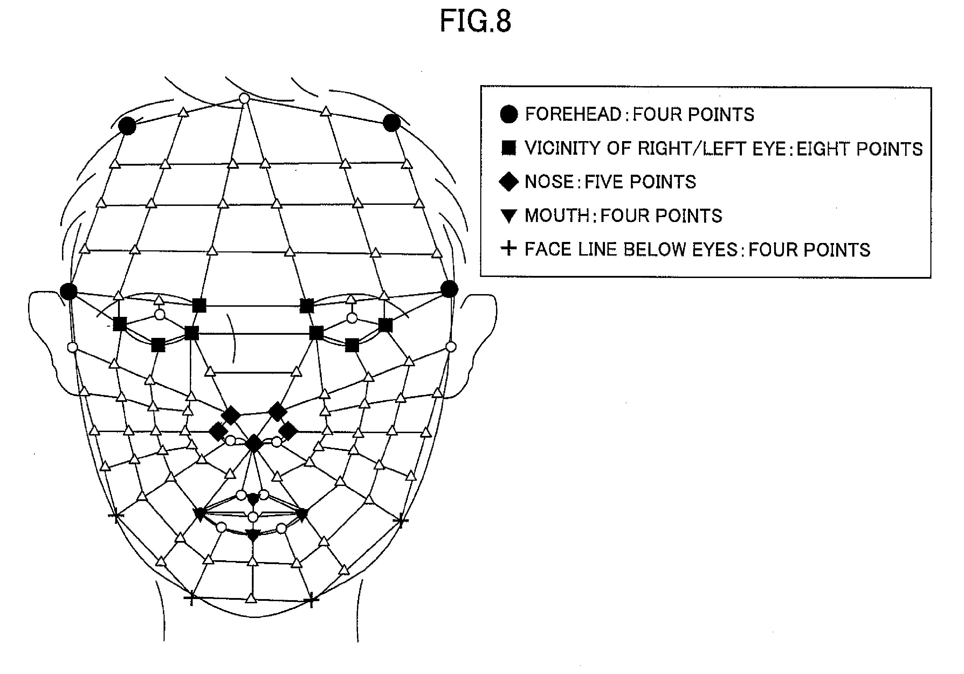

Fig. 8 is a diagram illustrating another embodiment of setting first feature points. For example, as illustrated in Fig. 8, at least 25 first feature points are set in which 4-5 points are set for the forehead portion (e.g., 4 points indicated with black circles in Fig. 8), 8-10 points are set for the vicinity of the left and right eyes (8 points indicated with black squares in Fig. 8), 5-7 points are set for the nose (e.g., 5 points indicated with black rhombuses in Fig. 8), 4-9 points are set for the mouth (e.g., 4 points indicated with black inverted triangles in Fig. 8), and 4-6 points are set for the face line below the eyes (4 points indicated with plus signs in Fig. 8). By setting second feature points based on the first feature points, division similar to the case using the feature points in Figs. 5-7C can be achieved.

### <Division of face and generation of skin color distribution diagram>

Next, generation of a skin color distribution of a divided face is described in detail. In this embodiment, a skin color distribution diagram of a facial image is obtained by using the illumination apparatus for evenly illuminating the entire face and the digital camera used as the photograph apparatus described in, for example, Masuda et al., "Development of spot/freckle quantizing system using image analysis", Journal of Society of Cosmetic Chemists of Japan, Vol. 28, No. 2, 1994. However, the present invention is not limited to this digital image photographing method.

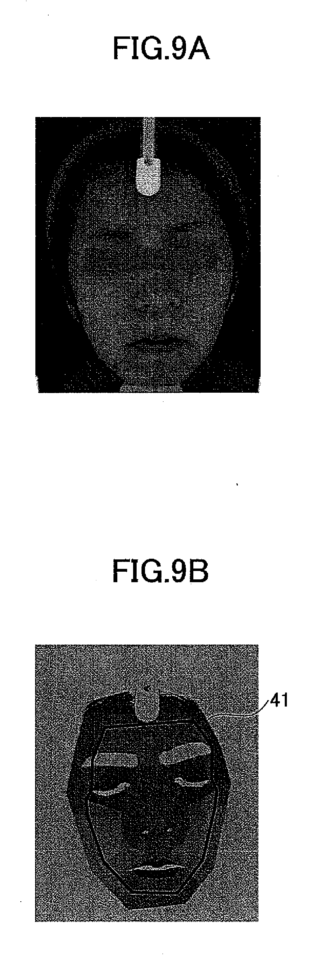

Figs. 9A-9C are diagrams for describing an example of the flow of performing face division on an image obtained by photography. In the example of Figs. 9A-9C, an image of a female model A in her thirties taken by the above-described conventional photograph apparatus is used.

As illustrated in Fig. 9A, a total of 109 feature points can be obtained by photographing the test subject being set at a predetermined position and designating the first feature points (e.g., 37 points) with the above-described face division part 24.

The face division part 24 performs the division into 93 regions by using the 109 feature points based on the settings of Figs. 7A-7C. The image illustrated in Fig. 9B is the results of coloring the regions with an average color of each region. The skin color distribution is generated based on average values using at least one of L^{*}, a^{*}, b^{*}, C_{ab}^{*}, and h_{ab} of a L*a*b* color system, tri-stimulus values X, Y, Z of an XYZ color system, and values of RGB, hue H, lightness V, chroma C, melanin amount, and hemoglobin amount for each region. In this embodiment, an image is generated by using the three components of the L^{*}, a^{*}, b^{*} color system, the XYZ color system, and hue H, lightness V, and chroma C.

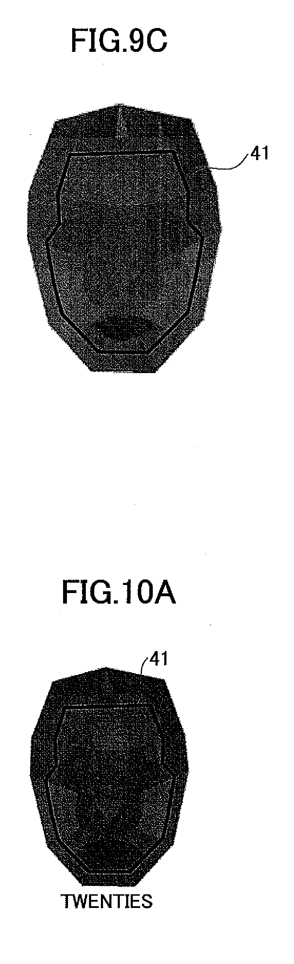

In Fig. 9B, because the portion outside the regions and the portion inside the regions having no skin color are not evaluated, these portion are colored with a specific color which is significantly different from skin color (e.g., cyan). Further, in Figs. 9B and 9C, since meticulous data of skin are omitted, it is easy to determine the distribution of skin color. In the case of the model A of Fig. 9A, it can be understood that the skin around the eyes is dark.

With the skin color evaluation apparatus 20 according to an embodiment of the present invention, because the illumination at the peripheral portion surrounding the photographed face has low evenness, the skin color distribution evaluation part 25 can remove data of the peripheral portion. More specifically, the skin color distribution evaluation part 25 performs evaluation by setting a predetermined frame 41 encompassing a portion of the 93 divided regions as illustrated in Figs. 9B and 9C and using data of a predetermined number of regions (61 regions in Figs. 9B and 9C) as valid data.

With the same method, an "average face" is divided. By coloring each of the obtained regions of the model A with 93 skin colors, pure color data without face shape data of the model can be determined as illustrated in Fig. 9C.

Because evaluation can be performed based on the divided regions, skin shape data of the target subject can be omitted and skin color distribution can be easily compared between people having different facial shapes. Therefore, by utilizing this feature, evaluation can be performed by comparing the facial skin color distribution of model A with the average values of a person of the same age group.

The images of Figs. 9B and 9C are generated by the image generation part 26. The generated image may be displayed to the user or the like via the output part 22 and stored in the storage part 23.

### <Example of generating comparative facial skin color distribution: S04)

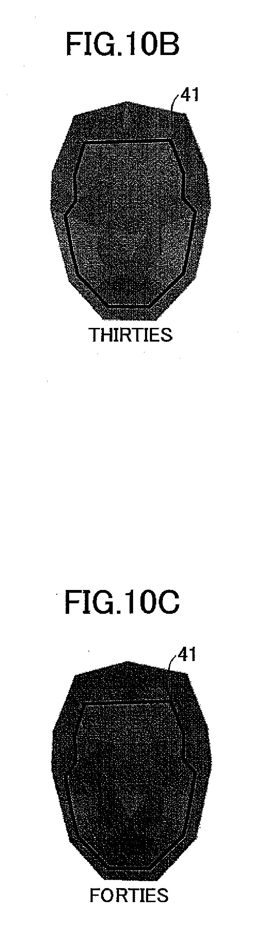

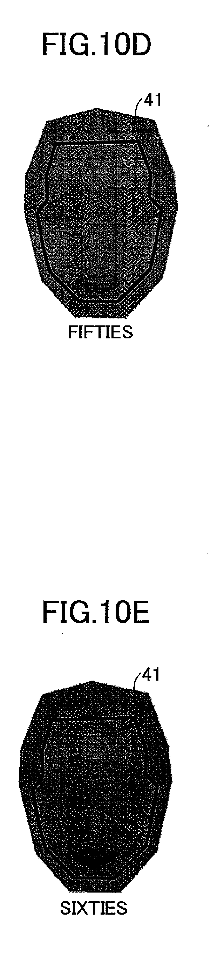

Next, an example of generating facial skin color distribution for comparison by the skin color distribution evaluation part 25 is described. Figs. 10A-10E are diagrams illustrating examples of comparative skin color distribution. Figs. 10A-10E illustrate examples of skin color distribution of age groups from the twenties to sixties.

As illustrated in Figs. 10A-10E, facial images photographed from a person of each age group are obtained from the storage part 23; the facial images are divided into regions, skin color distribution is obtained based on average values using at least one of of L^{*}, a^{*}, b^{*}, C_{ab}^{*}, and h_{ab} of a L*a*b* color system, tri-stimulus values X, Y, Z of an XYZ color system, and values of RGB, hue H, lightness V, chroma C, melanin amount, and hemoglobin amount; and average values of each age group is obtained, to thereby obtain the average skin color distribution.

As illustrated in Figs. 10A-10E, each area of an average face is colored by using data of the average skin color distribution of Japanese females of the corresponding age group from the twenties to sixties. The colored image is generated by the image generation part 26, output by the output part 22, and stored by the storage part 23. By being displayed in the colored average face, average skin color distribution of each age group can be generated as illustrated in Figs. 10A-10E. By comparing with data of the average skin color distribution, skin color evaluation can be performed on a target evaluation image with high accuracy.

### <Comparison of skin color distribution>

Next, an example of comparing skin color distribution is described in detail. In this embodiment, the skin color distribution evaluation part 25 performs comparison of skin color distribution by obtaining difference values. For example, when comparing the model A (thirties) illustrated in Fig. 9A with a thirties average skin color distribution of Fig. 10B, it can be understood that the upper part of the face of the model A is darker.

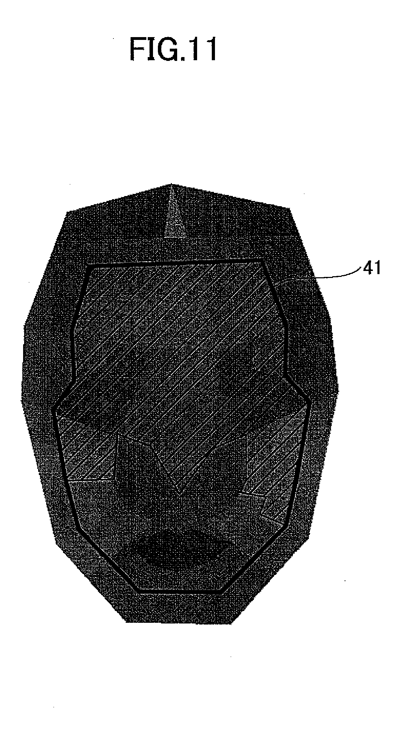

Fig. 11 is a diagram for describing an example of comparing skin color distribution by obtaining difference values. In Fig. 11, the difference value of the melanin amount (obtained from color value of each region) between the average face and the face of model A is obtained. In the frame 41, a portion where the melanin amount of the model A is greater is indicated with diagonal lines.

It can be understood from Fig. 11 that melanin in the upper half of the face of the model A is greater compared to that of the average of a person of the same age group. The comparative example is not limited to an average skin color distribution but could be a skin color distribution of an ideal face.

With the above-described embodiment, skin color distribution can be obtained by dividing a facial image into predetermined regions. Further, with the above-described embodiment, an easily comprehensible image formed only of colors and without facial shapes can be obtained by replacing colors with those of an average face. The above-described embodiment can contribute to counseling during sales of cosmetics since difference values with respect to average data of a person of a certain category (age group, occupation group, gender group), data of an ideal person (e.g., a celebrity), past data of an individual, or data of another person can be used.

### <Example of aggregating (grouping) skin color distribution and generating skin color distribution profile>

The skin color distribution evaluation part 25 in this embodiment performs principal component analysis on skin color areas having similar tendency of color based on, for example, past data and aggregates (groups) the skin color regions by obtaining the principal component. Thereby, evaluation can be easily performed for each group.

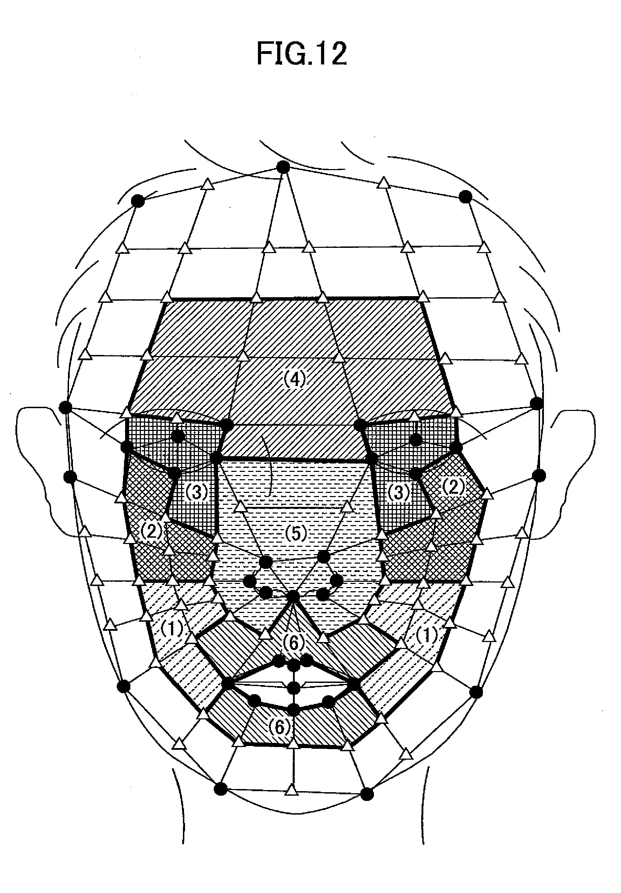

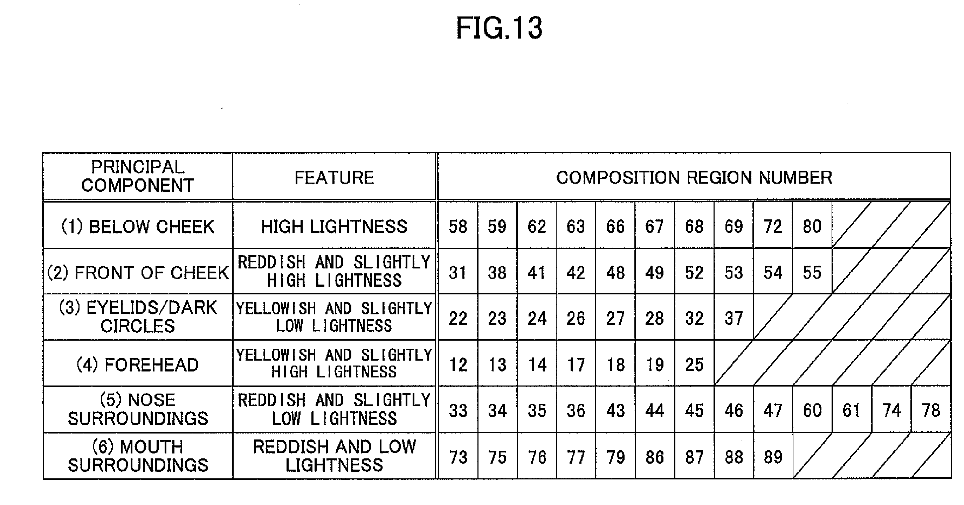

Fig. 12 is a diagram illustrating an example of regions divided into groups. Fig. 13 is a table illustrating an example of features of the colors and region numbers of each group corresponding to those of Fig. 12. The feature points that form the regions illustrated in Figs. 12 and 13 correspond to those of Figs. 5-7C.

In the example of Figs. 12 and 13, the portions indicating the groups of the principal components are (1) below cheek, (2) front of cheek, (3) eyelids/dark circles, (4) forehead, (5) nose surroundings, and (6) mouth surroundings. The features of color are high lightness for the group "(1) below cheek", reddish and slightly high lightness for the group "(2) front of cheek", yellowish and slightly low lightness for the group "(3) eyelids/dark circles", yellowish and slightly high lightness for the group "(4) forehead", reddish and slightly low lightness for the group "(5) nose surrounding", and reddish and low lightness for the group "(6) mouth surrounding".

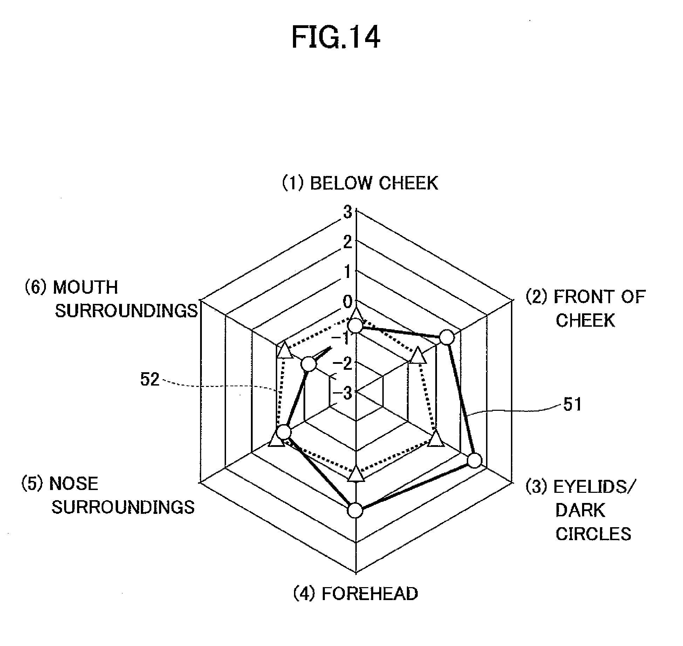

Fig. 14 is a diagram illustrating an example of evaluation results of skin color distribution. In the example of Fig. 14, a radar chart is used to indicate principal component points corresponding to the above-described principle components (1)-(6). The line 51 represents the average value of principle component scores of an exemplary female in her thirties. The line 52 represents the principal component scores of the above-described model A.

In the example of Fig. 14, a facial skin color profile is generated by obtaining principal component scores of 6 principle components (indicated with white circles in Fig. 14) from the melanin amount of 57 regions (excluding 4 regions of lips) of the model A. Likewise, an average 30 age group profile is generated by obtaining 6 principal component scores of the average values of the 30 age group (indicated with white triangles in Fig. 14). The results of this are illustrated in Fig. 14. The features of skin color distribution of an individual can be instantly understood in that "model A has more melanin amount at the forehead and around the eyes compared to the average of her age group". In Fig. 14, evaluation results do not have to be indicated with all of the 6 principal components but could be indicated with at least one of the principal components.

Accordingly, evaluation can be performed based on simply 6 types of data, so as to provide the user with easily comprehensible indices allowing the user to instantly determine the features of skin color distribution. In Fig. 14, evaluation results do not have to be indicated with all of the 6 principal components but could be indicated with at least one of the principal components.

In S05 of the skin color evaluation operation illustrated in Fig. 4, skin color is compared by comparing an individual's skin color distribution obtained in S03 with a comparative skin color distribution obtained in S04. However, the present invention is not limited to such method. For example, as illustrated in Figs. 12-14, evaluation can be performed by generating skin color distribution profile from measured results and comparing a generated skin color distribution profile with an already stored comparative skin color distribution profile.

The image and values generated in Figs. 12-14 may be displayed to the user by the output part 22 and stored by the storage part 23.

### <Comparison between conventional method and present method>

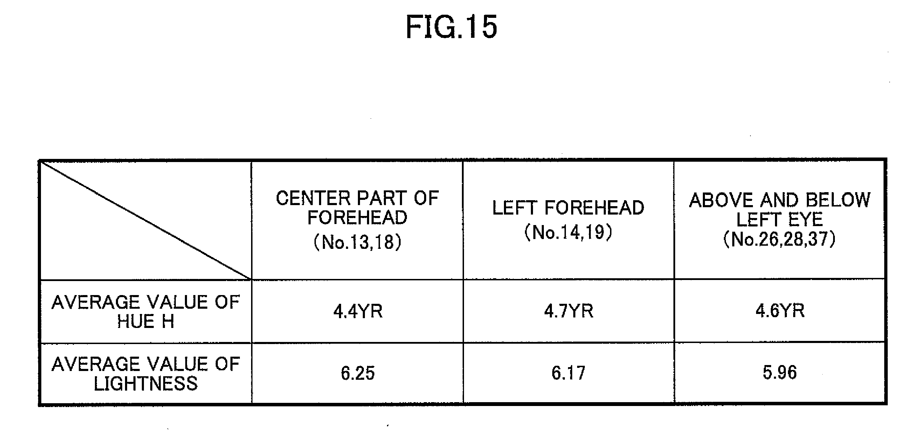

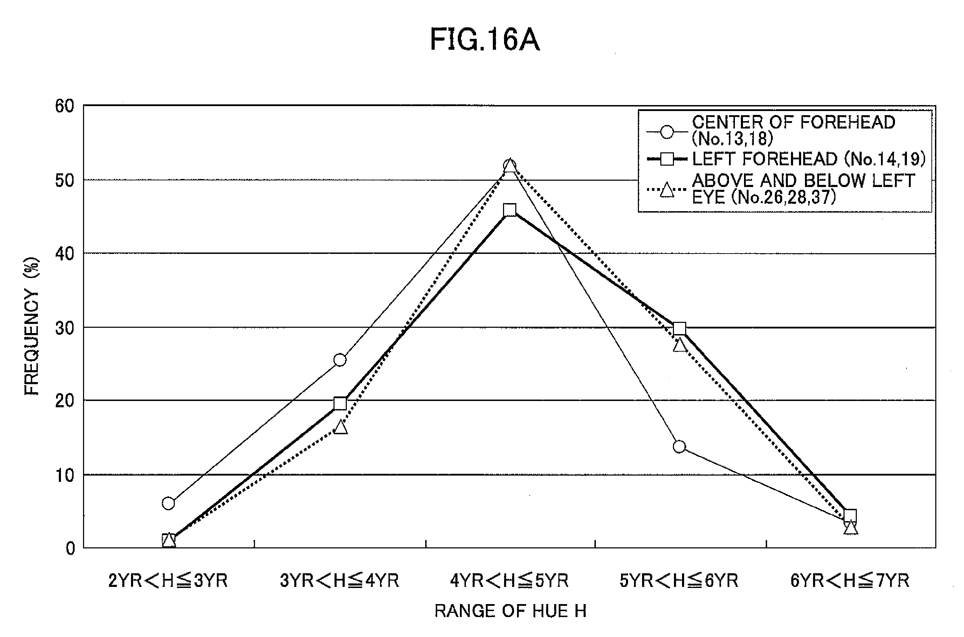

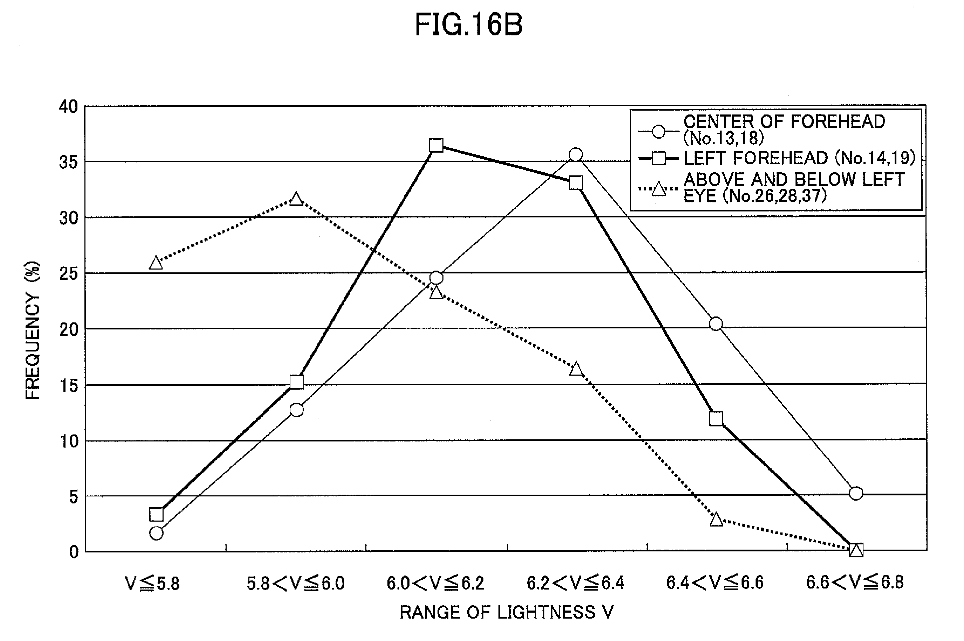

Next, a comparison between a conventional method and the present method is described. Fig. 15 is a diagram illustrating an example for describing hue H and lightness V due to differences among groups. Fig. 16A is a diagram illustrating an example of a histogram of hue corresponding to Fig. 15. Fig. 16B is a diagram illustrating an example of a histogram of lightness V corresponding to Fig. 15. Further, Fig. 16A has a horizontal axis indicating the range of hue H and a vertical axis indicating frequency (%). Further, Fig. 16B has a horizontal axis indicating the range of lightness V and a vertical axis indicating frequency (%).

The present invention performs skin color evaluation using a digital camera. Compared to a conventional method (non-patent document 1 and non-patent document 2) using a colorimeter that obtains data of a certain point, the present invention can minutely divide a face of a test subject and perform evaluation. The present invention can further divide the face with ease.

Further, in a case of grouping regions of a face that have a similar tendency in color, the grouping can be performed with high accuracy because a statistical method referred to as principal component analysis is used. As a result, although regions of a face are divided into 4 groups in non-patent document 1 excluding a neck, it can be understood that regions can be divided into 6 groups according to the statistical analysis and that the dividing method is different from the conventional method.

Further, in displaying a skin color profile, although the actual measured values of hue and lightness of a plane are displayed in the non-patent document 2, the present invention uses a radar chart with respect to, for example, a color value as illustrated in Fig. 14 and displays a value of an individual and an average value of a comparative subject.

Likewise, although there exists conventional research for evaluating unevenness of the skin color of a face by using a digital camera (non-patent document 3 and non-patent document 4), these are methods that obtain standard deviation of lightness L* or strength of yellowishness b* or obtain difference values of L* between the cheek and the chin with respect to pixels of a predetermined area but do not analyze the skin color distribution of an entire face.

More specifically, in non-patent document 1, a center part (○1), (○2) of a forehead is grouped as zone A (dark and reddish). Meanwhile, in the same forehead, a left part (○3) is grouped as zone C (dark and yellowish) which is the same group as a part above the left eye (○4) and a part below the left eye (○5).

Fig. 15 illustrates a case using the present invention to examine the color features of a center part of a forehead (corresponding to region nos. 13, 18 in the present invention), a part above the left eye and a part below the left eye (region nos. 26, 28, 37).

As illustrated in Fig. 15, there is hardly any difference between the average values regarding hue H at the three regions (center part of forehead, left part of forehead, and parts above and below the left eye). The tendency can be observed from the histogram illustrated in Fig. 16. Thus, there is no ground for dividing into two groups.

However, in terms of lightness V, it can be understood that the center part of the forehead and the left part of the forehead are to be in the same group but in a group different from the parts above and below the left eye. The same can be said based on the histogram illustrated in Fig. 16B.

Accordingly, in the present invention, region nos. 13 and 18 corresponding to the center part (○1) (○ 2) of the forehead and region nos. 14 and 19 corresponding to the left part (○3) of the forehead belong in the same group "(4) forehead" and not in the group "(2) eyelids/dark circles" of the region nos. 26, 28, and 37.

Accordingly, by grouping with the face dividing method of the present invention, skin color evaluation can be performed with greater accuracy.

With the above-described present invention, evaluation of skin color can be performed with high accuracy regardless of the shape of the face. More specifically, skin color distribution can be determined by dividing an input facial image into predetermined regions. Further, an easily comprehensible image of color data only and excluding shapes of a face can be obtained by replacing the colors of, for example, an average face. Further, difference values with respect to an average value of people of a certain category or with respect to another person can be obtained.

Although the above-described embodiment explains a case where the target of the skin color evaluation is a face, the target is not limited to the face and could be another portion such as an arm or a hand.

Further, the present invention is not limited to these embodiments, but variations and modifications may be made without departing from the scope of the present invention.

The present application is based on Japanese Priority Application No. 2008-008370 filed on January 17, 2008, with the Japanese Patent Office, the entire contents of which are hereby incorporated by reference.

## Claims

1. A skin color evaluation method for evaluating skin color from an input image including a face region, the skin color evaluation method **characterized by** comprising:
a division step for dividing an entire face region of the image into predetermined regions according to first feature points formed of at least 25 areas that are set beforehand and second feature points that are set by using the first feature points;
a skin color distribution evaluation step for performing evaluation by generating a skin color distribution based on average values using at least one of L^{*}, a^{*}, b^{*}, C_{ab}^{*}, and h_{ab} of a L*a*b* color system, tri-stimulus values X, Y, Z of an XYZ color system, and the values of RGB, hue H, lightness V, chroma C, melanin amount, and hemoglobin amount and performing evaluation based on measured results with respect to the regions divided in the dividing step; and
a screen generation step for displaying the measured results or evaluation results on a screen.

2. The skin color evaluation method as claimed in claim 1, **characterized in that** the division step sets a plurality of the at least 25 areas for a forehead, a vicinity of left and right eyes, a nose, a mouth, and a face line below a face line of an entire face image.

3. The skin color evaluation method as claimed in claim 1, **characterized in that** the division step divides into 93 regions surrounded by no less than 3 areas selected from the first feature points and the second feature points.

4. The skin color evaluation method as claimed in claim 1, **characterized in that** the skin color distribution evaluation step performs evaluation by associating a skin color distribution generated according to average values of each divided region using at least one of L^{*}, a^{*}, b^{*}, C_{ab}^{*}, h_{ab} of a L*a*b* colour system, tristimulus values X, Y, Z of an XYZ color system, and the values of RGB, hue H, lightness V, chroma C, melanin amount, and hemoglobin amount with respect to a skin color distribution of each divided region of an average face by compositing a plurality of facial images prepared beforehand with a morphing process and averaging facial shapes.

5. The skin color evaluation method as claimed in claim 1, **characterized in that** the skin color distribution evaluation step obtains average values from at least one of L^{*}, a^{*}, b^{*}, C_{ab} and h_{ab} of a L*a*b* color system, tri-stimulus values X, Y, Z of an XYZ color system, and the values of RGB, hue H, lightness V, chroma C, melanin amount, and hemoglobin amount, aggregates the obtained average values into similar regions, and performs evaluation based on skin color distribution of the aggregated regions.

6. The skin color evaluation method as claimed in claim 5, **characterized in that** the skin color distribution evaluation step performs evaluation of the skin color distribution by generating at least one of an ideal skin color distribution set beforehand, a past skin color distribution, another person's skin color distribution, an average value of plural skin color distributions, and the skin color distribution of the aggregated regions as a comparative skin color distribution and comparing the comparative skin color distribution with a target individual data.

7. A skin color evaluation apparatus for evaluating skin color from an input image including a face region, the skin color evaluation apparatus **characterized by** comprising:
a division part for dividing an entire face region of the image into predetermined regions according to first feature points formed of at least 25 areas that are set beforehand and second feature points that are set by using the first feature points;
a skin color distribution evaluation part for performing evaluation by generating a skin color distribution based on average values using at least one of L^{*}, a^{*}, b^{*}, C_{ab}^{*}, and h_{ab} of a L*a*b* color system, tri-stimulus values X, Y, Z of an XYZ color system, and the values of RGB, hue H, lightness V, chroma C, melanin amount, and hemoglobin amount and performing evaluation based on measured results with respect to the regions divided by the dividing part; and
a screen generation part for displaying the measured results or evaluation results on a screen.

8. The skin color evaluation apparatus as claimed in claim 7, **characterized in that** the division part sets a plurality of the at least 25 areas for a forehead, a vicinity of left and right eyes, a nose, a mouth, and a face line below a face line of an entire face image.

9. The skin color evaluation apparatus as claimed in claim 7, **characterized in that** the division part divides into 93 regions surrounded by no less than 3 areas selected from the first feature points and the second feature points.

10. The skin color evaluation apparatus as claimed in claim 7, **characterized in that** the skin color distribution evaluation part performs evaluation by associating a skin color distribution generated according to average values of each divided region using at least one of L^{*}, a^{*}, b^{*}, C_{ab}^{*}, h_{ab} of a L*a*b* color system, tri-stimulus values X, Y, Z of an XYZ color system, and the values of RGB, hue H, lightness V, chroma C, melanin amount, and hemoglobin amount with respect to a skin color distribution of each divided region of an average face by compositing a plurality of facial images prepared beforehand with a morphing process and averaging facial shapes.

11. The skin color evaluation apparatus as claimed in claim 7, **characterized in that** the skin color distribution evaluation part obtains average values from at least one of L^{*}, a^{*}, b^{*}, C_{ab} and h_{ab} of a L*a*b* color system, tri-stimulus values X, Y, Z of an XYZ color system, and the values of RGB, hue H, lightness V, chroma C, melanin amount, and hemoglobin amount, aggregates the obtained average values into similar regions, and performs evaluation based on skin color distribution of the aggregated regions.

12. The skin color evaluation apparatus as claimed in claim 7, **characterized in that** the skin color distribution evaluation part performs evaluation of the skin color distribution by generating at least one of an ideal skin color distribution set beforehand, a past skin color distribution, another person's skin color distribution, an average value of plural skin color distributions, and the skin color distribution of the aggregated regions as a comparative skin color distribution and comparing the comparative skin color distribution with a target individual data.

13. A skin color evaluation program for evaluating skin color from an input image including a face region, the skin color evaluation program causing a computer to execute:
a division step for dividing an entire face region of the image into predetermined regions according to first feature points formed of at least 25 areas that are set beforehand and second feature points that are set by using the first feature points;
a skin color distribution evaluation step for performing evaluation by generating a skin color distribution based on average values using at least one of L^{*}, a^{*}, b^{*}, C_{ab}^{*}, and h_{ab} of a L*a*b* color system, tri-stimulus values X, Y, Z of an XYZ color system, and the values of RGB, hue H, lightness V, chroma C, melanin amount, and hemoglobin amount and performing evaluation based on measured results with respect to the regions divided in the dividing step; and
a screen generation step for displaying the measured results or evaluation results on a screen.

14. A computer-readable recording medium on which a skin color evaluation program is recorded for evaluating skin color from an input image including a face region, the computer-readable recording medium on which the skin color evaluation program is recorded causing a computer to execute:
a division step for dividing an entire face region of the image into predetermined regions according to first feature points formed of at least 25 areas that are set beforehand and second feature points that are set by using the first feature points;
a skin color distribution evaluation step for performing evaluation by generating a skin color distribution based on average values using at least one of L^{*}, a^{*}, b^{*}, C_{ab}^{*}, and h_{ab} of a L*a*b* color system, tri-stimulus values X, Y, Z of an XYZ color system, and the values of RGB, hue H, lightness V, chroma C, melanin amount, and hemoglobin amount and performing evaluation based on measured results with respect to the regions divided in the dividing step; and
a screen generation step for displaying the measured results or evaluation results on a screen.
